# EUROPEAN PATENT APPLICATION

(11) **EP 3 407 552 A1**
(43) Date of publication of application: **28.11.2018**
(21) Application number: 18174007.7
(22) Date of filing: 24.05.2018
(51) Int. Cl.: H04L 12/707, H04L 12/703

(54) **INFORMATION PROCESSING APPARATUS AND RECORDING MEDIUM STORING INFORMATION PROCESSING PROGRAM**

(30) Priority: 26.05.2017 JP 2017104085
(71) Applicant: FUJITSU LIMITED, Kanagawa 211-8588 (JP)
(72) Inventor: Fujimori, Takafumi, Kanagawa, 211-8588 (JP); Kobayashi, Shimuya, Kanagawa, 211-8588 (JP)
(74) Representative: Hoffmann Eitle

(57) **Abstract**

An information processing apparatus includes: a first apparatus including: a first hardware, a first controller that manages the first hardware, and a first switch that switches connection between the first hardware, the first controller, and a second apparatus; and the second apparatus including: a second hardware, a second controller that manages the second hardware, and a second switch that switches connection between the second hardware, the second controller, and the first apparatus, wherein the first switch performs control to couple the first controller to a first signal line between the first apparatus and the second apparatus, the second switch performs control to couple the second hardware to the first signal line, and the first controller obtains information output from the second hardware through the first signal line coupled to the second hardware.

## Description

### FIELD

The embodiments discussed herein are related to an information processing apparatus and a recording medium storing an information processing program.

### BACKGROUND

The Intelligent Platform Management Interface (IPMI) is a standard specification for server management and monitoring. The IPMI manages and monitors the hardware of a server using a management board (MMB) and a baseboard management controller (BMC).

In an information processing system, service processor buses are switched.

Related art is disclosed in Japanese Laid-open Patent Publication No. 61-166670.

In a server including a plurality of system boards (SBs), an operating system (OS) or the like collects information from hardware on the individual SBs in the partition. At that time, the OS or the like collects information from BMCs on non-home SBs via BMCs in the partition, so that it may take much time to collect information.

This can occur not only in managing hardware in a server including a plurality of SBs but also in managing hardware in another information processing apparatus including a plurality of apparatuses.

For example, in an information processing apparatus including a plurality of apparatuses, a control unit of one apparatus may collect information directly from hardware in another apparatus.

### SUMMARY

According to an aspect of the embodiments, an information processing apparatus includes: a first apparatus including: a first hardware, a first controller that manages the first hardware, and a first switch that switches connection between the first hardware, the first controller, and a second apparatus; and the second apparatus including: a second hardware, a second controller that manages the second hardware, and a second switch that switches connection between the second hardware, the second controller, and the first apparatus, wherein the first switch performs control to couple the first controller to a first signal line between the first apparatus and the second apparatus, the second switch performs control to couple the second hardware to the first signal line, and the first controller obtains information output from the second hardware through the first signal line coupled to the second hardware.

According to an aspect of the embodiments, a control unit in one apparatus obtains information directly from hardware in another apparatus.

### BRIEF DESCRIPTION OF DRAWINGS

FIG. 1 illustrates an example of a server;
FIG. 2 illustrates an example of sensor definition information and sensor data;
FIG. 3 illustrates an example of the sequence of a sensor-data collecting process;
FIG. 4 illustrates examples of commands and responses;
FIG. 5 illustrates an example of an information processing apparatus;
FIG. 6 illustrates an example of an information acquisition process;
FIG. 7 illustrates an example of a server;
FIG. 8 illustrates an example of the functional configuration of a MMB;
FIG. 9 illustrates an example of the functional configuration of a BMC;
FIG. 10 illustrates an example of an input-side switch unit and an output-side switch unit;
FIGs. 11A and 11B illustrate examples of control signals;
FIG. 12 illustrates an example of switch control for accessing hardware on SB #0;
FIG. 13 illustrates an example of switch control for accessing hardware on SB #1;
FIG. 14 illustrates an example of the sequence of a first switch control process;
FIG. 15 illustrates an example of the sequence of a second switch control process;
FIG. 16 illustrates an example of switch control for accessing hardware on SB #3 after reconstruction;
FIG. 17 illustrates switch control for accessing hardware on SB #1 after reconstruction;
FIG. 18 illustrates an example of the sequence of a reconstruction process; and
FIG. 19 illustrates an example of the hardware configuration of a BMC.

### DESCRIPTION OF EMBODIMENTS

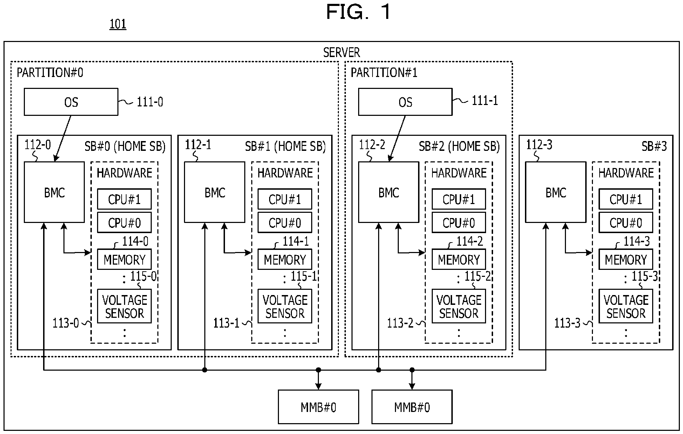

FIG. 1 illustrates an example of a server. A server 101 in FIG. 1 includes SB #0 to SB #3, MMB #0, and MMB #1.

The MMB #0 and the MMB #1 are redundant MMBs and manage and monitor the entire server 101 using firmware. Users can construct a partition by selecting one or more SBs and one or more input/output (I/O) resources via a user interface that MMB provides. An OS and a basic input/output system (BIOS) operate in each partition, and the MMB #0 and the MMB #1 store partition information.

One or a plurality of partitions are constructed in in the server 101. In the case where one partition includes a plurality of SBs, the user sets any one of the SBs as a home SB.

In FIG. 1, partition #0 includes SB #0 and SB #1, and partition #1 includes only SB #2. The SB #0 is the home SB of the partition #0, and the SB #1 is a non-home SB. The SB #2 is the home SB of the partition #1.

SB #i (i = 0 to 3) includes a BMC 112-i and hardware 113-i. Hardware 113-i includes hardware devices, such as a central processing unit (CPU) #0, a CPU #1, a memory 114-i, and a voltage sensor 115-i. The BMC 112-i is connected to the hardware 113-i via a signal line of an inter-integrated circuit (I2C) or the like and manages and monitors the hardware 113-i in conformance with the IPMI.

The BMC of the home SB stores sensor definition information and sensor data that the hardware devices on the SB output. The BMC of the non-home SB stores only sensor data that the hardware devices on the non-home SB output.

OS 111-j (j = 0, 1) operates on a plurality of CPUs in partition #j and can access the BMC on the home SB via a keyboard controller style (KCS) interface. Agent software operating on the OS 111-j can also access the BMC on the home SB via the KCS interface.

The BMCs 112-0 to 112-3 and the MMBs #0 and #1 are connected via a private local area network (LAN) closed in the server 101. MMB #j (j = 0, 1) can communicate with the BMCs 112-0 to 112-3 via the private local area network. The BMC 112-i can communicate with another BMC 112-k (k ≠ i) via the private local area network.

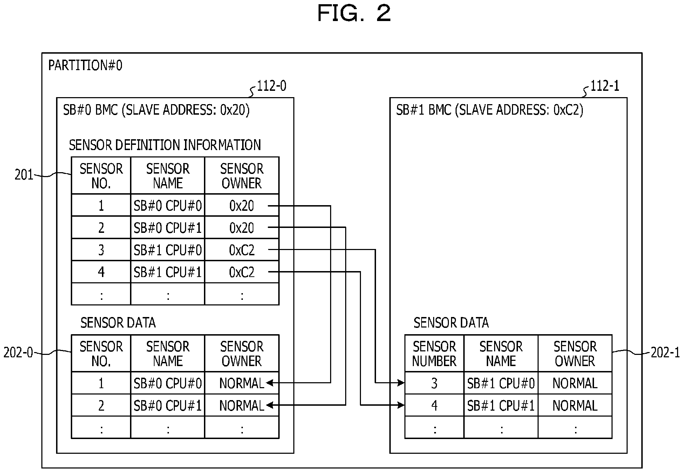

FIG. 2 illustrates an example of information stored in the BMC 112-0 of the SB #0 and the BMC 112-1 of the SB #1. The BMC 112-0 of the SB #0, which is the home SB, stores sensor definition information 201 and sensor data 202-0, and the BMC 112-1 of the SB #1, which is a non-home SB, stores sensor data 202-1.

The sensor definition information 201 is definition information on all hardware devices present in the partition #0 and includes sensor number, sensor name, and sensor owner. The sensor number is the serial number of each hardware device in hardware 113-i, and the sensor name is identification information on each hardware device. The sensor owner represents the address (slave address) of the BMC that stores the sensor data on the hardware devices. The address of the BMC 112-0 is "0x20", and the address of the BMC 112-1 is "0xC2".

Sensor data 202-i is the history of information output from the hardware devices on SB #i and includes sensor number, sensor name, and data. The data describes information that a hardware device corresponding to the sensor number and the sensor name outputs.

For example, the sensor name of a hardware device with sensor number "1" is "SB #0 CPU #0", and its sensor owner is "0x20". The sensor data 202-0 stores "Normal" indicating the state of the hardware device as the data on the hardware device.

The sensor name of a hardware device with sensor number "3" is "SB #1 CPU #0", and its sensor owner is "0xC2". The sensor data 202-1 stores "Normal" as the data on the hardware device.

The sensor definition information 201 and the sensor data 202-i also store information on the memory 114-i, the voltage sensor 115-i, and so on in FIG. 1 in addition to the information on the CPU #0 and the CPU #1.

The OS 111-0 can access the BMC 112-0 on the SB #0, which is the home SB, and can collect sensor data from each hardware device in the partition #0 based on the sensor definition information 201 stored in the BMC 112-0. The agent software operating on the OS 111-0 can also collect sensor data from each hardware device in partition #0, like the OS 111-0.

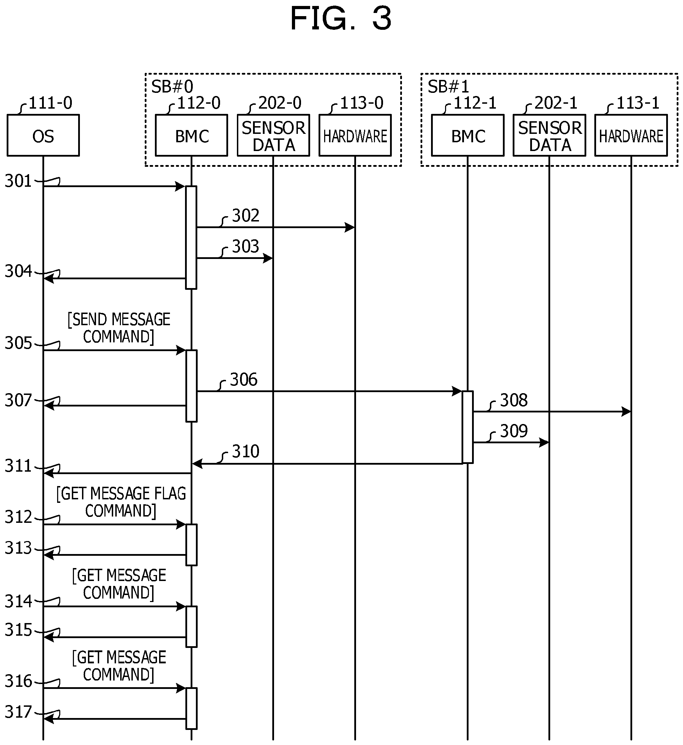

FIG. 3 illustrates the sequence of a sensor data collecting process in the partition #0. The OS 111-0 issues an acquisition request (direct command) to acquire sensor data on the hardware on the SB #0, which is the home SB, to the BMC 112-0 on the SB #0 (step 301). The BMC 112-0 accesses the hardware 113-0 on the SB #0 via I2C with reference to sensor owner in the sensor definition information 201 to obtain data from the hardware 113-0 (step 302). The BMC 112-0 updates the sensor data 202-0 (step 303) and sends the obtained data to the OS 111-0 as response data (step 304).

The OS 111-0 issues an acquisition request (IPMI-standard Send Message command) to acquire sensor data on the hardware on the non-home SB to the BMC 112-0 (step 305). The BMC 112-0 sends an acquisition request to acquire sensor data on the hardware 113-1 on the SB #1 to the BMC 112-1 with reference to sensor owner in the sensor definition information 201 (step 306). The BMC 112-0 sends a response indicating that the command is received to the OS 111-0 (step 307).

The BMC 112-1 accesses the hardware 113-1 via I2C (step 308) to obtain data from the hardware 113-1 and updates the sensor data 202-1 (step 309). The BMC 112-1 sends the obtained data to the BMC 112-0 (step 310), and the BMC 112-0 sends a notification that a response is received from the non-home SB to the OS 111-0 (step 311).

The OS 111-0 issues a command (IPMI-standard Get Message Flag command) to determine whether sensor data (response data) on the hardware on the non-home SB is present to the BMC 112-0 (step 312). The BMC 112-0 sends a response indicating that response data is present to the OS 111-0 (step 313).

The OS 111-0 issues an acquisition request (IPMI-standard Get Message command) to acquire response data to the BMC 112-0 (step 314). The BMC 112-0 sends the data received from the BMC 112-1 to the OS 111-0 as response data (step 315).

The OS 111-0 issues a Get Message command to the BMC 112-0 again (step 316). The BMC 112-0 sends a response indicating that no response data is present to the OS 111-0 (step 317).

Thus, in the process of acquiring sensor data on the hardware on the home SB, the number of interactions occurring between the OS 111-0 and the BMC 112-0 is one. In the process of acquiring sensor data on the hardware on the non-home SB, a plurality of interactions occur.

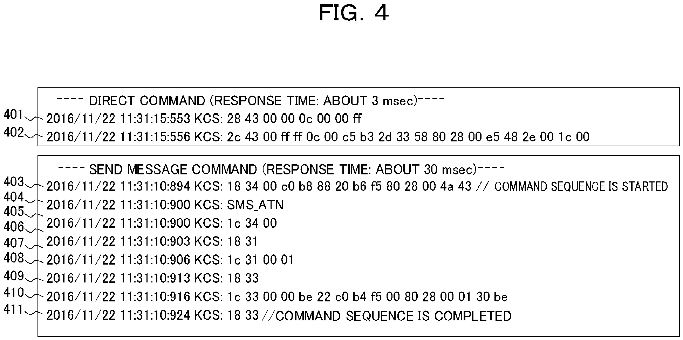

FIG. 4 illustrates commands and responses transferred between the OS 111-0 and the BMC 112-0 in the process of collecting sensor data in FIG. 3. A command 401 corresponds to the acquisition request issued from the OS 111-0 in step 301, and a response 402 corresponds to the response data sent from the BMC 112-0 in step 304.

A command 403 corresponds to the Send Message command issued from the OS 111-0 in step 305, and a response 404 corresponds to the response sent from the BMC 112-0 in step 307. A notification 405 corresponds to the notification sent from the BMC 112-0 in step 311.

A command 406 corresponds to the Get Message Flag command issued from the OS 111-0 at step 312, and a response 407 corresponds to the response sent from the BMC 112-0 in step 313.

A command 408 corresponds to the Get Message command issued from the OS 111-0 in step 314, and a response 409 corresponds to the response data sent from the BMC 112-0 in step 315.

A command 410 corresponds to the Get Message command issued from the OS 111-0 in step 316, and a response 411 corresponds to the response sent form the BMC 112-0 in step 317.

In FIG. 4, a response time for the command 401 is about 3 msec., and a response time for the command sequence after the command 403 is about 30 msec. This indicates that the process for acquiring sensor data on the hardware on the non-home SB takes about 10 times longer than the time for the process of acquiring sensor data on the hardware on the home SB. Of the response time for the command sequence, about 18 msec. is the time taken for an inquiry from the BMC 112-0 to the BMC 112-1.

For example, when a hypervisor that operates a virtual machine collects sensor data in a partition including a plurality of SBs, a command may time out due to time-consuming data collection from the non-home SB.

When agent software in a partition including a plurality of SBs collects sensor data at the time of startup, the agent software may access fifty or more hardware devices per SB. In this case, time -out rarely occurs in starting the agent software due to time-consuming data collection from the non-home SB.

For that reason, the time taken for an OS or agent software operating on an OS to obtain sensor data on the hardware on the non-home SB may be reduced.

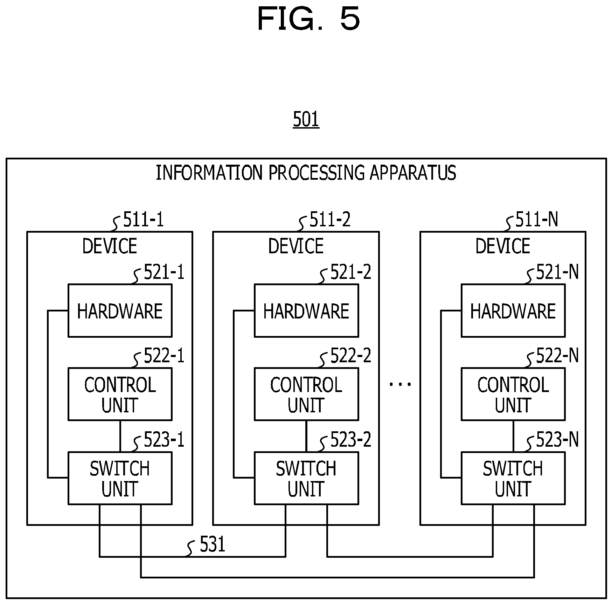

FIG. 5 illustrates an example of the information processing apparatus. The information processing apparatus 501 illustrated in FIG. 5 includes apparatuses 511-1 to 511-N (N is an integer greater than or equal to 2). An apparatus 511-1 (i = 1 to N) includes hardware 521-i, a control unit 522-i, and a switch unit 523-i.

The hardware 521-i outputs information. The control unit 522-i manages the hardware 521-i. The switch unit 523-i switches connection among the hardware 521-i, the control unit 522-i, and another apparatus 511-k (k ≠ i).

The switch unit 523-1 in the apparatus 511-1 performs control to connect the control unit 522-1 in the apparatus 511-1 to a signal line 531 between the apparatus 511-1 and the apparatus 511-2. The switch unit 523-2 in the apparatus 511-2 performs control to connect the hardware 521-2 in the apparatus 511-2 to the signal line 531. The control unit 522-1 in the apparatus 511-1 obtains information output from the hardware 521-2 through the signal line 531 connected to the hardware 521-2 in the apparatus 511-2.

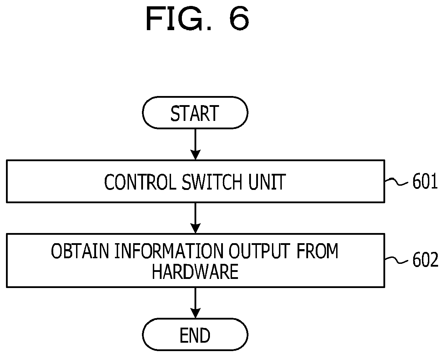

FIG. 6 illustrates an information acquisition process that the control unit 522-1 in the apparatus 511-1 in FIG. 5 performs. First, the control unit 522-1 controls the switch unit 523-1 to connect the control unit 522-1 to the signal line 531 (step 601). The signal line 531 is a signal line corresponding to the apparatus 511-2 indicated by the identification information, among signal lines connected to the hardware 521-i in the individual apparatuses 511-i. The control unit 522-1 acquires information output from the hardware 521-2 through the signal line 531 (step 602).

In the information processing apparatus 501 in FIG. 5, a control unit in one apparatus obtains information directly from hardware in another apparatus.

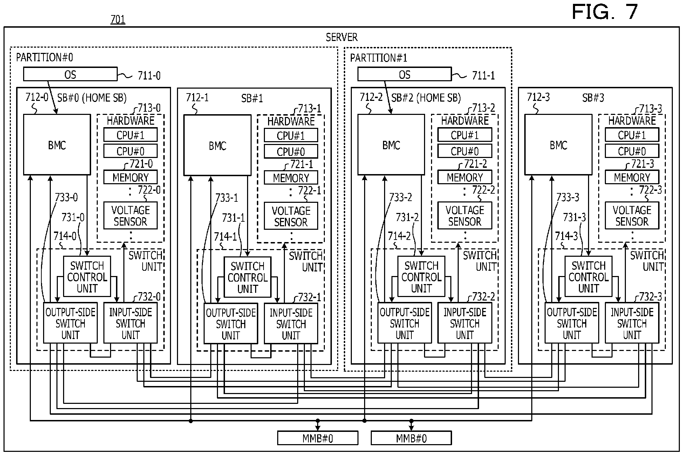

FIG. 7 illustrates an example of the server. FIG. 7 illustrates a server corresponding to the information processing apparatus 501 in FIG. 5. The server 701 in FIG. 7 includes SB #0 to SB #3, MMB #0, and MMB #1. The SB #0 to SB #3 each correspond to the apparatus 511-i in FIG. 5.

Partition #0 includes SB #0 and SB #1, and partition #1 includes only SB #2. The SB #0 is the home SB of the partition #0. The SB #1 is a non-home SB. The SB #2 is the home SB of the partition #1. The SB #3 is set as a reserved SB that does not belong to any partition.

SB #i (i = 0 to 3) includes a BMC 712-i, hardware 713-i, and a switch unit 714-i. The BMC 712-i, the hardware 713-i, and the switch unit 714-i respectively correspond to the control unit 522-i, the hardware 521-i, and the switch unit 523-i in FIG. 5. The MMB #j (j = 0, 1) corresponds to a management unit that manages and monitors the entire server 701.

The hardware 713-i includes hardware devices, such as a CPU #0, a CPU #1, a memory 721-i, and a voltage sensor 722-i. The BMC 712-i manages and monitors each hardware device in conformance with the IPMI. The switch unit 714-i includes a switch control unit 731-i, an input-side switch unit 732-i, and an output-side switch unit 733-i.

The input-side switch unit 732-i is connected to the hardware 713-i and the output-side switch units 733-0 to 733-3 through signal lines of the I2C or the like. The output-side switch unit 733-i is connected to the BMC 712-i and the input-side switch units 732-0 to 732-3 through signal lines of the I2C or the like. The switch control unit 731-i changes the connection of the signal lines by switching between the input-side switch unit 732-i and the output-side switch unit 733-i.

The BMC 712-i is connected to the switch control unit 731-i through a signal line, such as a general purpose input/output (GPIO). The BMC 712-i can also access any hardware 713-i in SB #0 to SB #3 by switching between the input-side switch unit 732-i and the output-side switch unit 733-i with the switch control unit 731-i.

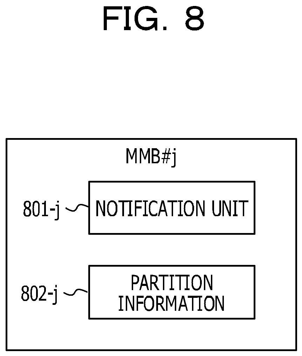

FIG. 8 illustrates an example of the functional configuration of the MMB #j in FIG. 7. The MMB #j in FIG. 8 includes a notification unit 801-j and stores partition information 802-j indicating the partition configuration in the server 701. The partition information 802-j includes identification information on SB #i that belongs to each partition and identification information indicating the home SB in each partition. The notification unit 801-j notifies BMC 712-0 to BMC 712-3 of the partition information 802-j.

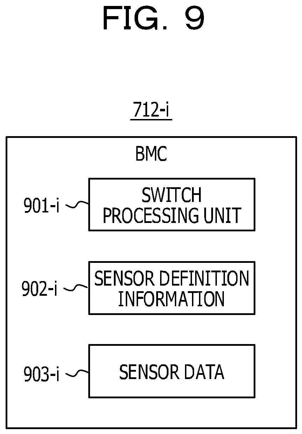

FIG. 9 illustrates an example of the functional configuration of the BMC 712-i in FIG. 7. The BMC 712-i in FIG. 9 includes a switch processing unit 901-i and stores sensor definition information 902-i and sensor data 903-i. The data structures of the sensor definition information 902-i and the sensor data 903-i are the same as the data structures of the sensor definition information 201 and the sensor data 202-i illustrated in FIG. 2.

For example, in the sensor data on the home SB, data output from the hardware on all the SBs in the partition is recorded. For example, in the sensor data 903-0 of the BMC 712-0 on SB #0, which is a home SB, not only data output from the hardware 713-0 on SB #0 but also data output from the hardware 713-1 on SB #1, which is a non-home SB, are recorded.

In the sensor definition information 902-i and the sensor data 903-i, not only information on the CPU #0 and the CPU #1 but also information on the memory 721-i, the voltage sensor 722-i, and so on in FIG. 7 are recorded. The CPU #0, the CPU #1, and the memory 721-i output data indicating the state of these hardware devices. Examples of the state of the hardware devices may include normal, warning, and error.

The voltage sensor 722-i outputs data indicating the operating voltages or supply voltages of the CPU #0 and the CPU #1. The voltage sensor 722-i may output data indicating whether the operating voltages or the supply voltages have exceeded a threshold.

The switch processing unit 901-i changes the setting of a control signal for the switch control unit 731-i according to a partition configuration that the partition information 802-j notified from the MMB #j indicates.

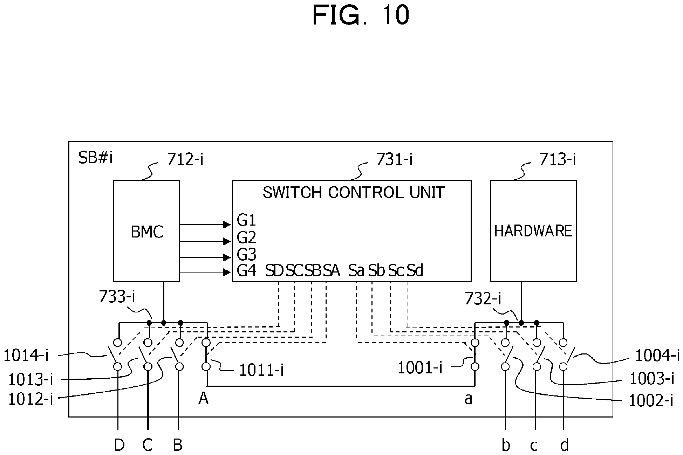

FIG. 10 illustrates an example of the input-side switch unit 732-i and the output-side switch unit 733-i in FIG. 7. The input-side switch unit 732-i includes switches 1001-i to 1004-i. The switch 1001-i switches connection between a port a and the hardware 713-i. The switch 1002-i switches connection between a port b and the hardware 713-i. The switch 1003-i switches connection between a port c and the hardware 713-i. The switch 1004-i switches the connection between a port d and the hardware 713-i.

The output-side switch unit 733-i includes switches 1011-i to 1014-i. The switch 1011-i switches connection between a port A and the BMC 712-i. The switch 1012-i switches connection between a port B and the BMC 712-i. The switch 1013-i switches connection between a port C and the BMC 712-i. The switch 1014-i switches connection between a port D and the BMC 712-i. The port a of the switch 1001-i and the port A of the switch 1011-i are connected by a signal line in the apparatus.

The BMC 712-i outputs control signals G1 to G4 for switching between the input-side switch unit 732-i and the output-side switch unit 733-i to the switch control unit 731-i. The control signal G1 and the control signal G2 are control signals for switching between the output-side switch units 733-i. The control signal G3 and the control signal G4 are control signals for switching between the input-side switch units 732-i.

The switch control unit 731-i respectively outputs control signals SA to SD to the switches 1011-i to 1014-i based on the control signal G1 and the control signal G2. The switch control unit 731-i respectively outputs control signals Sa to Sd to the switches 1001-i to 1004-i based on the control signal G3 and the control signal G4, respectively.

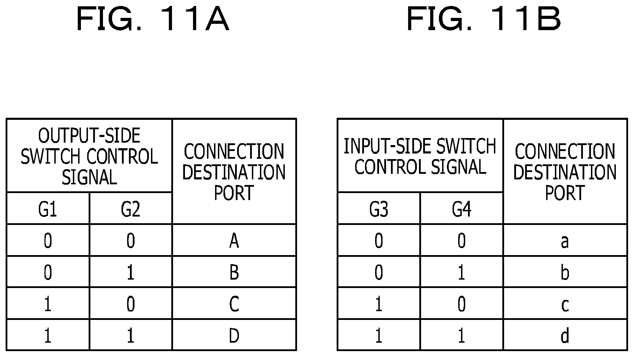

FIG. 11A and FIG. 11B illustrate examples of the control signals G1 to G4 in FIG. 10. FIG. 11A illustrates examples of the control signal G1 and the control signal G2 for switching between the output-side switch units 733-i. For example, when both the control signal G1 and the control signal G2 are logic "0", the switch 1011-i is set to ON, and the switches 1012-i to 1014-i are set to OFF. Consequently, the BMC 712-i is connected to the port A of the output-side switch unit 733-i.

Likewise, when the control signal G1 is logic "0", and the control signal G2 is logic "1", the BMC 712-i is connected to the port B, and when the control signal G1 is logic "1", and the control signal G2 is logic "0", the BMC 712-i is connected to the port C. When both the control signal G1 and the control signal G2 are logic "1", the BMC 712-i is connected to the port D.

FIG. 11B illustrates examples of the control signals G3 and G4 for switching between the input-side switch units 732-i. For example, when both the control signal G3 and the control signal G4 are logic "0", the switch 1001-i is set to ON, and the switches 1002-i to 1004-i are set to OFF. Consequently, the hardware 713-i is connected to the port a of the input-side switch unit 732-i.

Likewise, when the control signal G1 is logic "0", and the control signal G2 is logic "1", the hardware 713-i is connected to the port b, and when the control signal G1 is logic "1", and the control signal G2 is logic "0", the hardware 713-i is connected to the port c. When both the control signal G2 and the control signal G1 are logic "1", the hardware 713-i is connected to the port d.

In FIG. 10, the switch control unit 731-i switches the connection destination of the hardware 713-i using the input-side switch unit 732-i and switches the connection destination of the BMC 712-i using the output-side switch unit 733-i.

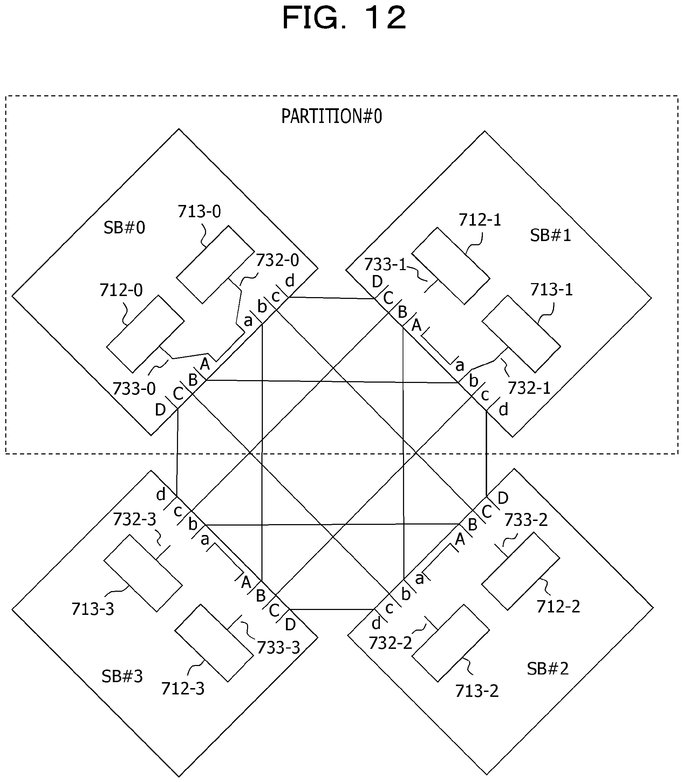

FIG. 12 illustrates an example of switch control when the BMC on the home SB accesses hardware on the same SB. The ports a to d in each SB #i indicate the ports of the input-side switch unit 732-i, and the ports A to D indicate the ports of the output-side switch unit 733-i.

The port A of the SB #0 is connected to the port a of the SB #0. The port B is connected to the port b of the SB #1. The port C is connected to the port c of the SB #2. The port D is connected to the port d of the SB #3.

The port A of the SB #1 is connected to the port a of the SB #1. The port B is connected to the port b of the SB #2. The port C is connected to the port c of the SB #3. The port D is connected to the port d of the SB #0.

The port A of the SB #2 is connected to the port a of the SB #2. The port B is connected to the port b of the SB #3. The port C is connected to the port c of the SB #0. The port D is connected to the port d of the SB #1.

The port A of the SB #3 is connected to the port a of the SB #3. The port B is connected to the port b of the SB #0. The port C is connected to the port c of the SB #1. The port D is connected to the port d of the SB #2.

The BMC 712-i on each SB #i stores information indicating the connection relationship between the ports A to D and the ports a to d of the SB #0 to the SB #3.

In FIG. 12, the BMC 712-0 on the SB #0, which is the home SB of the partition #0, is connected to the port A, and the hardware 713-0 is connected to the port a. This allows the BMC 712-0 to access the hardware 713-0 on the same SB #0 to obtain data from each hardware device.

For example, when the plurality of hardware devices in the hardware 713-0 are connected to a bus, the BMC 712-0 acquires data from the hardware devices by sequentially designating the addresses of the hardware devices.

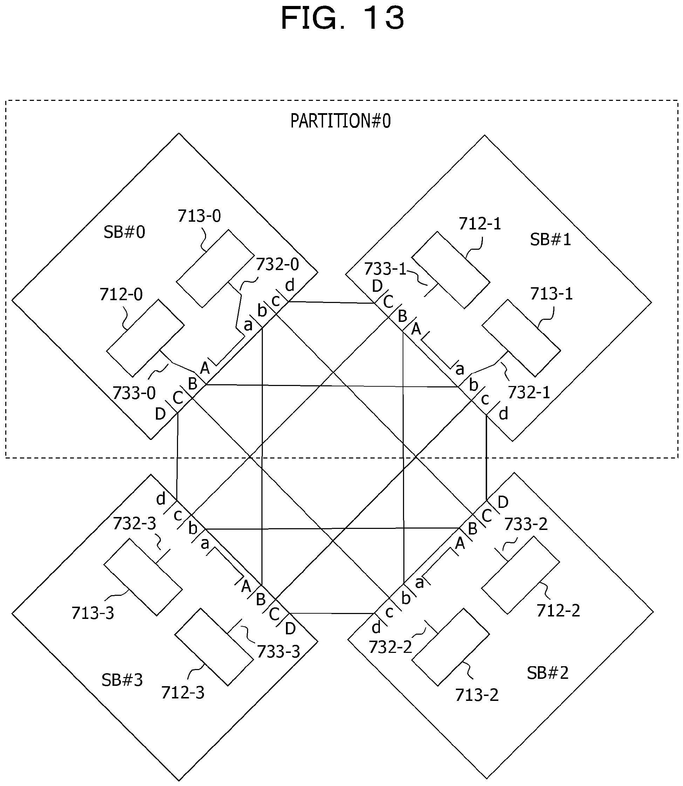

FIG. 13 illustrates an example of switch control when the BMC on the home SB accesses hardware on a non-home SB. In FIG. 13, the BMC 712-0 on the SB #0 is connected to the port B, and the hardware 713-1 on the SB #1, which is a non-home SB, is connected to the port b. This allows the BMC 712-0 to access the hardware 713-1 on the SB #1 to obtain data from each hardware device.

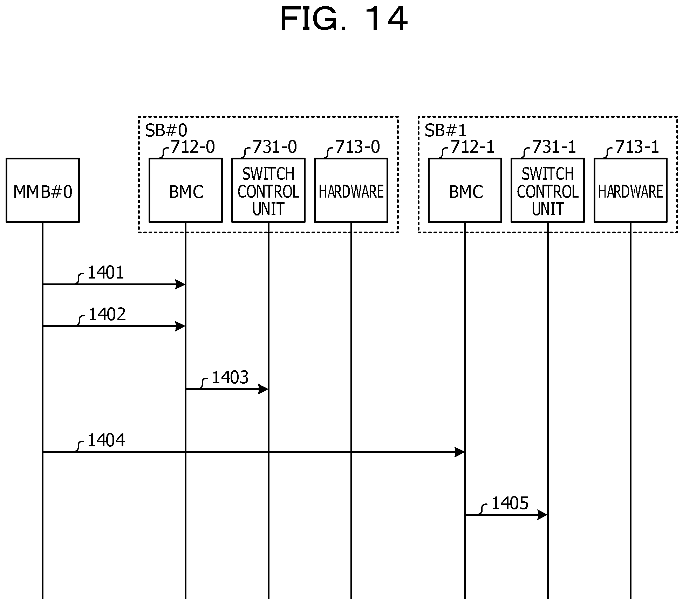

FIG. 14 illustrates a sequence of a first switch control process for switching between input-side switch units at the time of constructing the partition #0. A notification unit 801-0 of the MMB #0 notifies the BMC 712-0 on the SB #0, which is the home SB, of identification information on the SBs that belong to the partition #0 (step 1401). Thus, "SB #0" and "SB #1" are notified as identification information on the SBs that belong to the partition #0.

The notification unit 801-0 notifies the BMC 712-0 that the SB #0 is the home SB of the partition #0 (step 1402). The switch processing unit 901-0 of the BMC 712-0, which is notified that the SB #0 is the home SB, sets control signals (G3, G4) to (0, 0) and outputs the control signals (G3, G4) to the switch control unit 731-0 (step 1403).

The switch control unit 731-0 sets the switch 1001-0 to ON in accordance with the control signal Sa and sets the switches 1002-0 to 1004-0 to OFF in accordance with the control signals Sb to Sd. Consequently, the hardware 713-0 on the SB #0 is connected to the port A of the output-side switch unit 733-0 via the port a of the input-side switch unit 732-0, as illustrated in FIG. 12.

The notification unit 801-0 notifies the BMC 712-1 on the SB #1, which is a non-home SB, of the identification information "SB #0" on the home SB (step 1404). The switch processing unit 901-1 of the BMC 712-1, which is notified of the identification information "SB #0", sets the control signals (G3, G4) to (0, 1) and outputs the control signals (G3, G4) to the switch control unit 731-1 (step 1405).

The switch control unit 731-1 sets the switch 1002-1 to ON in accordance with the control signal Sb and sets the switches 1001-1, 1003-1, and 1004-1 to OFF in accordance with the control signals Sa, Sc, and Sd. Consequently, as illustrated in FIG. 12, the hardware 713-1 on the SB #1 is connected to the port B of the output-side switch unit 733-0 on the SB #0 via the port b of the input-side switch unit 732-1.

Thus, the BMC 712-1 switches the input-side switch unit 732-1 so that the hardware 713-1 is connected to the SB #0 by the notification unit 801-0 notifying the BMC 712-1 of the identification information on the SB #0, which is the home SB.

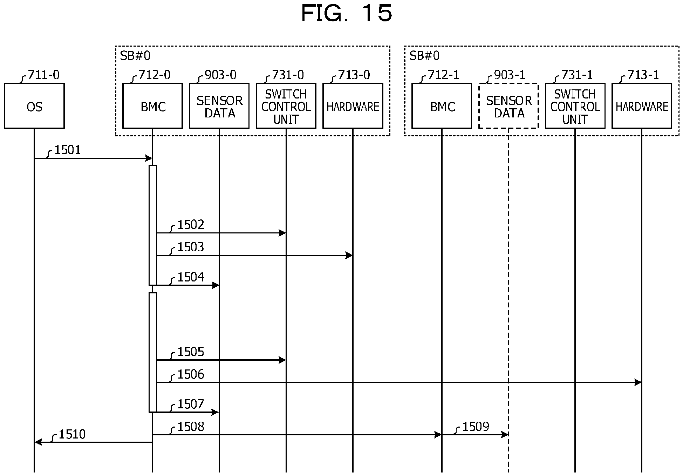

FIG. 15 illustrates an example of the sequence of a second switch control process for switching the output-side switch unit at the time of collecting sensor data in the partition #0. An OS 711-0 issues an acquisition request to acquire sensor data on the hardware of the partition #0 to the BMC 712-0 on the SB #0, which is the home SB (step 1501).

The switch processing unit 901-0 of the BMC 712-0 sets the control signals (G1, G2) to (0, 0) and outputs the control signals (G1, G2) to the switch control unit 731-0 (step 1502). The switch control unit 731-0 sets the switch 1011-0 to ON in accordance with the control signal SA and sets the switches 1012-0 to 1014-0 to OFF in accordance with the control signals SB to SD. Consequently, as illustrated in FIG. 12, the BMC 712-0 is connected to the hardware 713-0 via the port A of the output-side switch unit 733-0.

The BMC 712-0 accesses the hardware 713-0 (step 1503) to obtain data from the hardware 713-0 and stores the obtained data in the sensor data 903-0 (step 1504). Thus, the sensor data 903-0 is updated.

The switch processing unit 901-0 sets the control signals (G1, G2) to (0, 1) and outputs the control signals (G1, G2) to the switch control unit 731-0 (step 1505). The switch control unit 731-0 sets the switch 1012-0 to ON in accordance with the control signal SB and sets the switches 1011-0, 1013-0, and 1014-0 to OFF in accordance with the control signals SA, SC, and SD. Consequently, as illustrated in FIG. 13, the BMC 712-0 is connected to the hardware 713-1 on the SB #1 via the port B of the output-side switch unit 733-0.

The BMC 712-0 can thus switch the output-side switch unit 733-0 so that the BMC 712-0 is connected to the SB #1 by the notification unit 801-0 notifying the BMC 712-0 of the identification information on the SB #1, which is a non-home SB.

The BMC 712-0 accesses the hardware 713-1 (step 1506) to obtain data from the hardware 713-1 and stores the obtained data in the sensor data 903-0 (step 1507). Thus, the sensor data 903-0 is updated.

The BMC 712-0 sends the obtained data to the BMC 712-1 on the SB #1 (step 1508), and the BMC 712-1 stores the data received from the BMC 712-0 in sensor data 903-1 (step 1509). Thus, the sensor data 903-1 is synchronized with the sensor data 903-0. The BMC 712-0 sends the data obtained from the hardware 713-0 and the hardware 713-1 to the OS711-0 (step 1510).

In this manner, in FIG. 7, the BMC of the home SB directly obtains sensor data from the hardware on a non-home SB not only from the hardware on the home SB. This allows data on all hardware in the partition to be sent in response to an acquisition request from the OS or agent software operating on the OS without going through the BMC on the non-home SB. This reduces the time taken to collect sensor data in the partition.

The sensor-data collecting process illustrated in FIG. 15 may reduce the collection time to about one tenth of the collection time of the sensor-data collecting process in FIG. 3 and FIG. 4 to a collection time equivalent to the collection time of a server consisting of only one SB. The reduction of collection time reduces occurrence of time-out of a command of a hypervisor or time-out in starting agent software.

For example, the configurations of the partition #0 and the partition #1 in FIG. 7 may be dynamically changed. For example, when an error of the hardware 713-0 on the SB #0, which is the home SB of the partition #0, is detected, the partition #0 is recovered using the SB #3 set as a reserved SB. In this case, the partition #0 is reconstructed using the SB #3 and the SB #1, and the home SB is changed from the SB #0 to the SB #3.

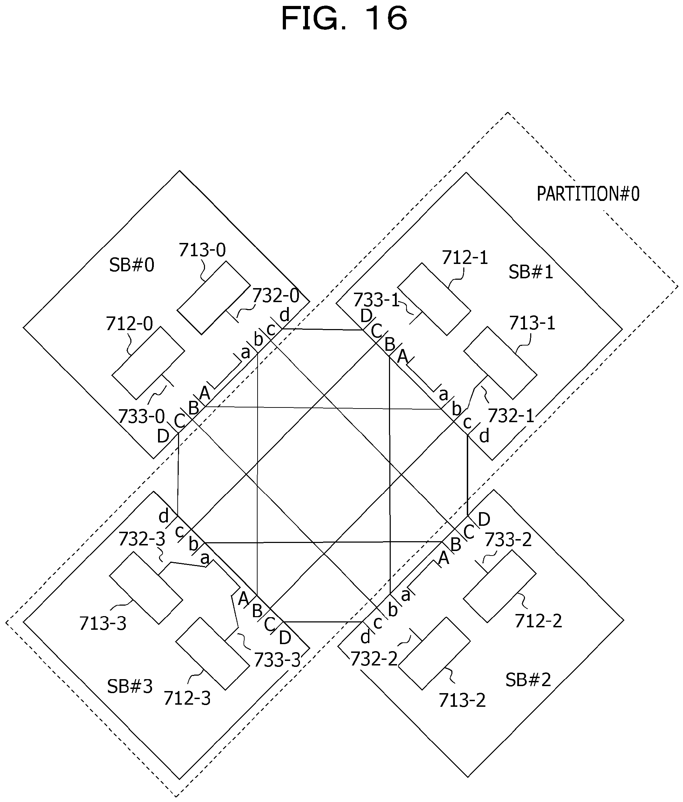

FIG. 16 illustrates an example of switch control when the BMC 712-3 on the SB #3 accesses hardware 713-3 on the SB #3 in the reconstructed partition #0. The BMC 712-3 can access the hardware 713-3 on the same SB #3 to obtain data from each hardware device by connecting the BMC 712-3 to the port A and connecting the hardware 713-3 to the port a.

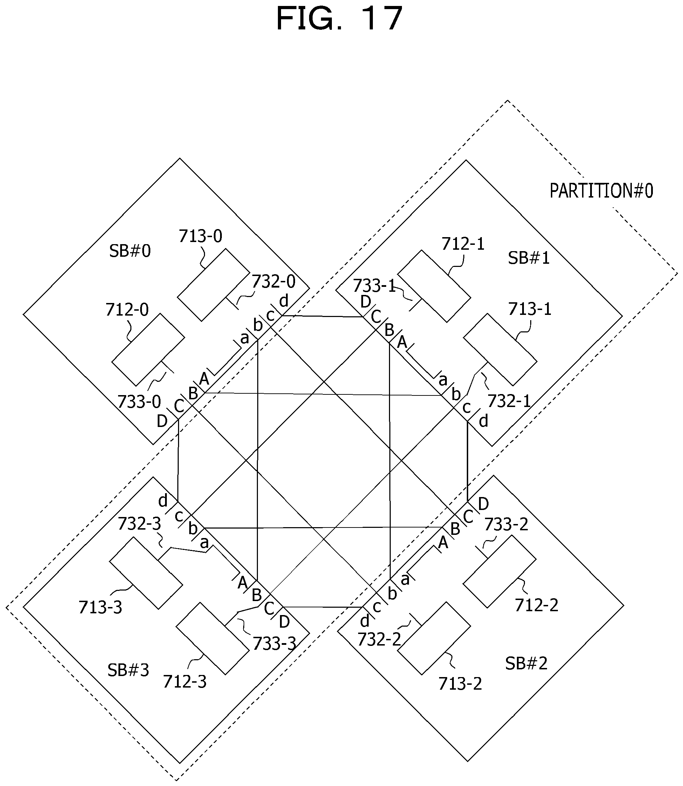

FIG. 17 illustrates an example of switch control when the BMC 712-3 accesses the hardware 713-1 on the SB #1, which is a non-home SB, in the reconstructed partition #0. By connecting the BMC 712-3 to the port C and connecting the hardware 713-1 to the port c, the BMC 712-3 accesses the hardware 713-1 on the SB #1 to obtain data from each hardware device.

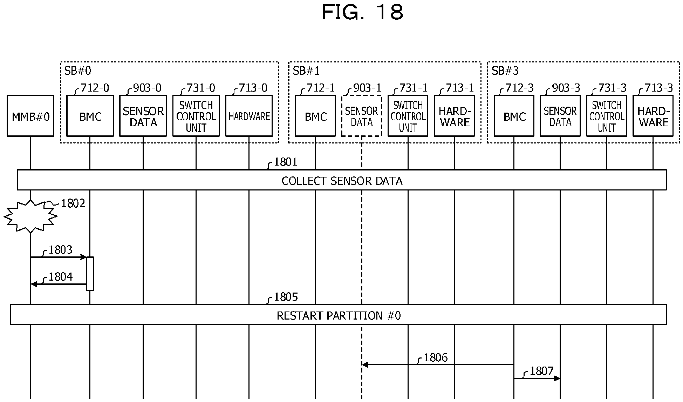

FIG. 18 illustrates an example of the sequence of a reconstruction process for changing the home SB when an error occurs in the partition #0. The MMB #0 monitors the entire server 701 and collects sensor data in each partition with the same sequence as the sequence in FIG. 15 (step 1801). The MMB #0 detects an error of a hardware device included in the hardware 713-0 on the SB #0 (step 1802) and instructs the BMC 712-0 to perform a degeneration process (step 1803).

The BMC 712-0 performs the degeneration process and sends a response to the MMB #0 (step 1804). From this point forward, the BMC 712-0 accesses only the hardware 713-0 on the SB #0.

The MMB #0 separates the SB #0 from the partition #0, installs the SB #3 into the partition #0 as a new home SB, and restarts the partition #0 (step 1805). At that time, the MMB #0 restarts the partition #0 with the same sequence as in FIG. 14.

The notification unit 801-0 of the MMB #0 notifies the BMC 712-3 on the SB #3 of "SB #3" and "SB #1", which is identification information on SBs that belong the partition #0. The notification unit 801-0 notifies the BMC 712-3 that the SB #3 is the home SB of the partition #0.

The switch processing unit 901-3 of the BMC 712-3 sets the control signals (G3, G4) to (0, 0) and outputs the control signals (G3, G4) to the switch control unit 731-3. The switch control unit 731-3 sets the switch 1001-3 to ON in accordance with the control signal Sa and sets the switches 1002-3 to 1004-3 to OFF in accordance with the control signals Sb to Sd. With this, the hardware 713-3 on the SB #3 is connected to the port A of the output-side switch unit 733-3 through the port a of the input-side switch unit 732-3, as illustrated in FIG. 16.

The notification unit 801-0 notifies the BMC 712-1 on the SB #1 of the identification information "SB #3" on the home SB. The switch processing unit 901-1 of the BMC 712-1 sets the control signals (G3, G4) to (1, 0) and outputs the control signals (G3, G4) to the switch control unit 731-1.

The switch control unit 731-1 sets the switch 1003-1 to ON in accordance with the control signal Sc and sets the switches 1001-1, 1002-1, and 1004-1 to OFF in accordance with the control signals Sa, Sb, and Sd. With this, the hardware 713-1 on the SB #1 is connected to the port C of the output-side switch unit 733-3 on the SB #3 through the port c of the input-side switch unit 732-1, as illustrated in FIG. 16.

Subsequently, the BMC 712-3 on the SB #3 requests the sensor data 903-1 from the BMC 712-1 to take over the sensor data 903-1 on the hardware 713-1 (step 1806). The BMC 712-1 sends the sensor data 903-1 to the BMC 712-3. The BMC 712-3 stores the sensor data 903-1 received from the BMC 712-1 in sensor data 903-3 (step 1807). Thus, the sensor data 903-1 is added to the sensor data 903-3.

After the partition #0 is restarted, the OS 711-0 collects the sensor data in the partition #0 with the same sequence as in FIG. 15. The OS 711-0 issues an acquisition request to obtain the sensor data on the hardware in the partition #0 to the BMC 712-3.

The switch processing unit 901-3 of the BMC 712-3 sets the control signals (G1, G2) to (0, 0) and outputs the control signals (G1, G2) to the switch control unit 731-3. The switch control unit 731-3 sets the switch 1011-3 to ON in accordance with the control signal SA and sets the switches 1012-3 to 1014-3 to OFF in accordance with the control signals SB to SD. With this, the BMC 712-3 illustrated in FIG. 16 is connected to the hardware 713-3 through the port A of the output-side switch unit 733-3.

The BMC 712-3 accesses the hardware 713-3 to obtain data from the hardware 713-3 and stores the obtained data in the sensor data 903-3.

The switch processing unit 901-3 sets the control signals (G1, G2) to (1, 0) and outputs the control signals (G1, G2) to the switch control unit 731-3. The switch control unit 731-3 sets the switch 1013-3 to ON in accordance with the control signals SC and sets the switches 1011-3, 1012-3, and 1014-3 to OFF in accordance with the control signals SA, SB, and SD. With this, the BMC 712-3 is connected to the hardware 713-1 on the SB #1 through the port C of the output-side switch unit 733-3, as illustrated in FIG. 17.

The BMC 712-3 accesses the hardware 713-1 to obtain data from the hardware 713-1 and stores the obtained data in the sensor data 903-3.

The BMC 712-3 sends the obtained data to the BMC 712-1 on the SB #1, and the BMC 712-1 stores the data received from the BMC 712-3 in the sensor data 903-1. The BMC 712-3 sends the data obtained from the hardware 713-3 and the hardware 713-1 to the OS 711-0.

The configurations of the server 101 in FIG. 1 and the server 701 in FIG. 7 are illustrative only, and some of the components may be omitted or changed depending on the use or conditions of the server. For example, the number of SBs is not limited to four, and any number of SBs may be included in each server. The number of partitions is not limited to two, and any number of partitions may be included in each server. The number of SBs that belong to one partition may be three or more. When no redundant MMB is used, the MMB #0 or MMB #1 may be omitted.

Hardware devices other than the CPU, the memory, and the voltage sensor may be mounted on each SB. For example, when a temperature sensor is mounted as a hardware device, the temperature sensor outputs data indicating the temperature of the CPU and data indicating whether the temperature of the CPU has exceeded a threshold. The data output from hardware devices may not be limited the state, voltage, and temperature of the hardware devices but include identification information on the SB.

The configuration of the information processing apparatus 501 in FIG. 5 is illustrative only, and some of the components may be omitted or changed depending on the use of conditions of the information processing apparatus 501.

The configuration of the MMB in FIG. 8 is illustrative only, and some of the components may be omitted or changed depending on the configuration or conditions of the server 701. The configuration of the BMC in FIG. 9 is illustrative only, and some of the components may be omitted or changed depending on the configuration or conditions of the server 701.

The configurations of the input-side switch unit 732-i and the output-side switch unit 733-1 in FIG. 10 are illustrative only, and some of the components may be omitted or changed depending on the configuration or conditions of the server 701. The numbers of the ports of the input-side switch unit 732-i and the output-side switch unit 733-i are changed depending on the number of SBs in the server 701.

The flowchart in FIG. 6 is illustrative only, and some of the processes may be omitted or changed depending on the configuration or conditions of the information processing apparatus 501. The sequences in FIG. 3, FIG. 14, FIG. 15, and FIG. 18 are illustrative only, and some of the processes may be omitted or changed depending on the configuration or conditions of the server.

The sensor definition information and sensor data in FIG. 2 and the commands and responses in FIG. 3 are illustrative only, and the information is changed depending on the configuration or conditions of the server 101. The control signals in FIGs. 11A and 11B are illustrative only, and other control signals may be used according to the specifications of the BMC 712-i and the switch control unit 731-i.

The connections among the ports in FIG. 12, FIG. 13, FIG. 16, and FIG. 17 are illustrative only, and the connections among the ports are changed depending on the numbers of the ports of the input-side switch unit 732-i and the output-side switch unit 733-i.

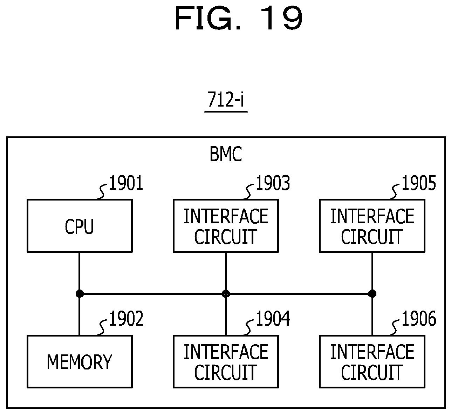

FIG. 19 illustrates an example of the hardware configuration of an information processing apparatus (computer) for use as the BMC 712-i in FIG. 7. The BMC 712-i in FIG. 19 includes a CPU 1901, a memory 1902, and interface circuits 1903 to 1906.

Examples of the memory 1902 include semiconductor memories, such as a read only memory (ROM), a random access memory (RAM), and a flash memory, which store the program and data for use in processing. The memory 1902 can store the sensor definition information 902-i and the sensor data 903-i in FIG. 9.

The CPU 1901 (processor) manages and monitors the hardware 713-i by executing the program using the memory 1902. The CPU 1901 operates also as the switch processing unit 901-i in FIG. 9 by executing the program.

An operator or user can store the program and data in a portable recording medium (not illustrated) and can load the program or data in the memory 1902 for use. Examples of the portable recording medium include a memory device, a flexible disk, an optical disk, and a magnetooptical disk. Other examples of the portable recording medium include a compact disk read only memory (CD-ROM), a digital versatile disk (DVD), and a universal serial bus (USB) memory.

Thus, a computer-readable recording medium that stores a program and data for use in processing is a physical (non-transitory) recording medium like the memory 1902 or a portable recording medium.

The interface circuit 1903 is connected to a communication network, such as a private local area network, to communicate with the MMB #j or another BMC 712-k (k ≠ i). The BMC 712-i can receive a program and data from an external apparatus via the interface circuit 1903 and can load the program and data in the memory 1902 for use.

The interface circuit 1904 is connected to a signal line, such as a KCS interface, to communicate with the OS or agent software operating on the OS. The interface circuit 1905 is connected to the output-side switch unit 733-i through a signal line, such as the I2C, to communicate with the hardware 713-i or hardware 713-k (k ≠ i). The interface circuit 1906 is connected to a signal line, such as a GPIO, to communicate with the switch control unit 731-i.

The configuration of the BMC 712-i in FIG. 19 is illustrative only, and some of the components may be omitted or changed depending on the configuration of the server 701.

## Claims

1. An information processing apparatus comprising:
a first apparatus including:
a first hardware,
a first controller that manages the first hardware, and
a first switch that switches connection between the first hardware, the first controller, and a second apparatus; and
the second apparatus including:
a second hardware,
a second controller that manages the second hardware, and
a second switch that switches connection between the second hardware, the second controller, and the first apparatus,
wherein the first switch performs control to couple the first controller to a first signal line between the first apparatus and the second apparatus,
the second switch performs control to couple the second hardware to the first signal line, and
the first controller obtains information output from the second hardware through the first signal line coupled to the second hardware.

2. The information processing apparatus according to claim 1, further comprising:
a management device that notifies the first controller of second identification information of the second apparatus and notifies the second controller of first identification information of the first apparatus,
wherein the first controller controls the first switch based on the second identification information, and the second controller controls the second switch based on the first identification information.

3. The information processing apparatus according to claim 2,
wherein the first controller controls the first switch based on the second identification information so as to couple the first controller to the first signal line, and
the second controller controls the second switch based on the first identification information so as to couple the second hardware to the first signal line.

4. The information processing apparatus according to claim 1, wherein the first switch includes:
a first input-side switch that switches connection between the first hardware and the second apparatus; and
a first output-side switch that switches connection between the first controller and the second apparatus, and
the second switch includes:
a second input-side switch that switches connection between the second hardware and the first apparatus; and
a second output-side switch that switches connection between the second controller and the first apparatus.

5. The information processing apparatus according to claim 4,
wherein the second input-side switch couples the second hardware to the first signal line, and the first output-side switch couples the first control unit to the first signal line.

6. The information processing apparatus according to claim 4,
wherein the first input-side switch couples the first hardware to an inside signal line of the first apparatus between the first input-side switch and the first output-side switch,
the first output-side switch couples the first controller to the inside signal line, and
the first controller obtains information output from the first hardware through the inside signal line coupled to the first hardware.

7. The information processing apparatus according to claim 2,
wherein, when the management device detects an error in the first hardware, the management device notifies a third controller in a third apparatus of the second identification information and notifies the second controller of third identification information of the third apparatus, and
the third controller controls a third switch in the third apparatus based on the second identification information so as to couple the third controller to a second signal line between the second apparatus and the third apparatus.

8. The information processing apparatus according to claim 7,
wherein the second controller controls the third switch based on the third identification information so as couple the second hardware to the second signal line, and
the third controller obtains information that the second hardware outputs after the error is detected through the second signal line.

9. The information processing apparatus according to claim 7,
wherein the first controller transmits the information obtained from the second hardware to the second controller before the error is detected, and
the second controller transmits the information received from the first controller to the third controller after the error is detected.

10. A non-transitory computer-readable recoding medium storing an information processing program which causes a computer to perform a process, the process comprising:
managing, by a first controller in a first apparatus, a first hardware in the first apparatus;
switching, by a first switch in the first apparatus, connection between the first hardware, the first controller, and a second apparatus;
managing, by a second controller in the second apparatus, a second hardware in the second apparatus;
switching, by a second switch in the second apparatus, connection between the second hardware, the second controller, and the first apparatus;
performing, by the first switch, control to couple the first controller to a first signal line between the first apparatus and the second apparatus;
performing, by the second switch, control to couple the second hardware to the first signal line; and
obtaining, by the first controller, information output from the second hardware through the first signal line coupled to the second hardware.

11. The non-transitory computer-readable recoding medium according to claim 9, further comprising:
notifying, by a management device, the first controller of second identification information of the second apparatus and notifying the second controller of first identification information of the first apparatus;
controlling, by the first controller, the first switch based on the second identification information; and
controlling, the second controller, the second switch based on the first identification information.

12. The non-transitory computer-readable recoding medium according to claim 11,
wherein the first switch is controlled based on the second identification information so as to couple the first controller to the first signal line, and
the second switch is controlled based on the first identification information so as to couple the second hardware to the first signal line.

13. The non-transitory computer-readable recoding medium according to claim 9,
wherein the first switch includes:
a first input-side switch that switches connection between the first hardware and the second apparatus; and
a first output-side switch that switches connection between the first controller and the second apparatus, and
the second switch includes:
a second input-side switch that switches connection between the second hardware and the first apparatus; and
a second output-side switch that switches connection between the second controller and the first apparatus.

14. The non-transitory computer-readable recoding medium according to claim 13,
wherein the second input-side switch couples the second hardware to the first signal line, and
the first output-side switch couples the first control unit to the first signal line.

15. The non-transitory computer-readable recoding medium according to claim 13,
wherein the first input-side switch couples the first hardware to an inside signal line of the first apparatus between the first input-side switch and the first output-side switch,
the first output-side switch couples the first controller to the inside signal line, and
the first controller obtains information output from the first hardware through the inside signal line coupled to the first hardware.

16. The non-transitory computer-readable recoding medium according to claim 10,
wherein, when the management device detects an error in the first hardware, the management device notifies a third controller in a third apparatus of the second identification information and notifies the second controller of third identification information of the third apparatus, and
the third controller controls a third switch in the third apparatus based on the second identification information so as to couple the third controller to a second signal line between the second apparatus and the third apparatus.
